# EUROPÄISCHE PATENTSCHRIFT

(11) **EP 1 020 327 B1**
(45) Veröffentlichungstag und Bekanntmachung des Hinweises auf die Patenterteilung: **09.06.2004**
(21) Anmeldenummer: 00100585.9
(22) Anmeldetag: 12.01.2000
(51) Int. Cl.: B60R 1/06

(54) **Hornförmige Rückblickspiegelanordnung für Nutzfahrzeuge, insbesondere für Omnibusse**
Horn-shaped rear view mirror for utility vehicles, in particular for buses
Réroviseur en forme de corne pour véhicules utilitaires, en particulier pour autobus

(30) Priorität: 13.01.1999 DE 19900987
(43) Veröffentlichungstag der Anmeldung: 19.07.2000
(73) Patentinhaber: MEKRA Lang GmbH & Co. KG, 90765 Fürth (DE)
(72) Erfinder: Lang, Heinrich, 91465 Ergersheim (DE); Popp, Albrecht, 91629 Weihenzell (DE); Pfanz, Jürgen, 91583 Schillingsfürst (DE)
(74) Vertreter: Winter, Brandl, Fürniss, Hübner, Röss, Kaiser, Polte Partnerschaft

(56) Entgegenhaltungen:
- EP-A- 0 399 401
- EP-A- 0 865 967
- DE-A- 4 429 604
- DE-A- 19 530 913
- US-A- 5 615 054
- US-A- 5 621 577
- US-A- 5 798 882
- US-A- 5 889 627

## Beschreibung

Die Erfindung betrifft eine hornförmige Rückblickspiegelanordnung für Nutzfahrzeuge und insbesondere für Omnibusse. Für den letztgenannten Einsatzzweck werden vermehrt sehr augenfällige Spiegelkonstruktionen verwendet, bei denen eine am oberen Ende der A-Säule der Buskarroserie befestigte, weit nach vorn ausladende Spiegelkonstruktion verwendet wird. In diesen ausladenden Konstruktionen - sogenannte "Hörnerspiegel" - sind der Hauptspiegel und weitere Zusatzspiegel zur Überwachung des Einstiegsbereichs und des für den Fahrer nicht einsehbaren Frontbereichs vor dem Bus integriert.

Ein Vertreter solcher "Hörnerspiegel" oder hornförmiger Rückblickspiegelanordnungen ist aus der DE-44 29 604 Al bekannt. Eine weitere gattungsgemässe hornförmige Rückblickspiegelanorndung ist aus der EP-A-0 865 967 bekannt. Letztere umfaßt einen an einer Fahrzeugkarroserie anbringbaren Haltearm mit einer tragenden Rohrstruktur als Kernelement, einen am freien Ende der Rohrstruktur befestigten Hauptspiegel mit einem Gehäuse, einer darin vorzugsweise motorisch verstellbar gelagerten Spiegelscheibe und ein die Rohrstruktur zwischen ihrem karroserieseitigen Ende und dem Hauptspiegel umgebenden Formteil zur Abdeckung der Rohrstruktur und zur Halterung von Zusatzspiegeln.

Bei dieser bekannten Rückblickspiegelanordnung sind der Hauptspiegel mit seinem Gehäuse und der Haltearm mit Formteil und den darin integrierten Zusatzspiegeln zwei getrennte Bauteile, die über die Rohrstruktur miteinander verbunden sind. Diese zweiteilige Struktur führt zu gewissen Einschränkungen beim Dessign derartiger Hörnerspiegel und zu einer zergliederten Struktur. Darüber hinaus verkompliziert sich durch die mehrteilige Konstruktion die Montage eines derartigen Hörnerspiegels.

Es ist daher Aufgabe der vorliegenden Erfindung den aus der EP-A-0 865 967 bekannten Hörnerspiegel kompakter zu gestalten.

Die Lösung dieser Aufgabe erfolgt durch die Merkmale des Anspruchs 1.

Demnach ist das Gehäuse des Hauptspiegels in das Formteil integriert und der Haupt- und der wenigstens eine Zusatzspiegel sind in einem gemeinsamen Spiegelkopf angeordnet. Durch die Aufhebung der Trennung zwischen Haupt- und Zusatzspiegel wird eine kompakte und elegante Spiegelkonstruktion möglich. Die kompakte Form mit einem Spiegelkopf hat auch aerodynamische Vorteile, da Pfeifgeräusche durch den Fahrtwind, wie sie bei der zweiteiligen Konstruktion nach dem Stand der Technik auftreten können, vermieden werden. Auch hinsichtlich Lufwiderstand läßt sich der kompakte Spiegelkopf günstiger gestalten.

Gemäß einer bevorzugten Ausführungsform der Erfindung ist ein einzelner Zusatzspiegel zur Überwachung des Bereichs vor dem Fahrzeug und des Bereichs links bzw. rechts zwischen dem Vorderende des Fahrzeugs und der Vorderachse das Fahrzeugs vorgesehen. Damit wird durch einen Spiegel die Funktion von bisher zwei Spiegeln übernommen, wodurch ebenfalls eine kompaktere Bauweise ermöglicht wird. Darüber hinaus ergibt sich durch die Verwendung eines statt zweier Zusatzspiegel ein erheblicher ergonomischer Vorteil, da nur noch ein Zusatzspiegel -für zwei Totwinkelbereiche - und ein Hauptspiegel überwacht werden müssen.

Die vorteilhafte Ausgestaltung der Erfindung nach Anspruch 3 gibt eine einfache Form des Zusatzspiegels an, mit dem die zwei unterschiedlichen Totwinkelbereiche überwacht werden können.

Gemäß einer weiteren vorteilhaften Ausgestaltung der Erfindung nach Anspruch 5 und 6 ist eine Abdeckung des Formteils vorgesehen. Durch diese Abdeckung wird zum einen das Formteil mit den darunterliegenden Komponenten geschützt und zum anderen lassen sich diese Abdeckungen dann entsprechend der Fahrzeugfarbe lackieren.

Gemäß einer vorteilhaften Ausgestaltung der Erfindung ist an dem gemeinsamen Spiegelkopf eine umlaufende Wasserabrißkante vorgesehen. Durch diese Wasserabrißkante wird bei Regenwetter verhindert, daß Wasser und Schmutz durch den Fahrtwind auf die Spiegeloberfläche befördert wird.

Gemäß einer weiteren vorteilhaften Ausgestaltung der Erfindung läßt sich die Spiegelanordnung entweder nach vorne in Richtung Windschutzscheibe oder nach hinten in Richtung Seitenscheibe wegklappen. Damit muß bei der Benutzung von Waschstraßen die Spiegelanordnung nicht abmontiert werden.

Gemäß einer weiteren vorteilhaften Ausgestaltung der Erfindung ist die erfindungsgemäße Spiegelanordnung mittels einer Klemmhalterung am Fahrzeug montierbar, die eine einfache Demontage bzw. Abnahme der Spiegelanordnung vom Fahrzeug ermöglicht. Diese Klemmhalterung ist Gegenstand einer am gleichen Tag wie die vorliegende Anmeldung hinterlegte Anmeldung (Anwaltsaktenzeichen: P/11ML0309/DE, auf die hier vollinhaltlich Bezug genommen wird.

Die übrigen Unteransprüche beziehen sich auf weitere vorteilhafte Ausgestaltungen der Erfindung.

Weitere Merkmale, Einzelheiten und Vorteile der Erfindung ergeben sich aus der nachfolgenden Beschreibung der bevorzugten Ausführungsform anhand der Zeichnung.

Es zeigt:
Fig. 1 eine Gesamtansicht in Explosionsdarstellung einer vorteilhaften Ausführungsform der Erfindung,
Fig. 2 Details der Klemmhalterung für den Spiegel nach Fig. 1,
Fig. 3a eine Seitenansicht des Spiegels nach Fig. 1,

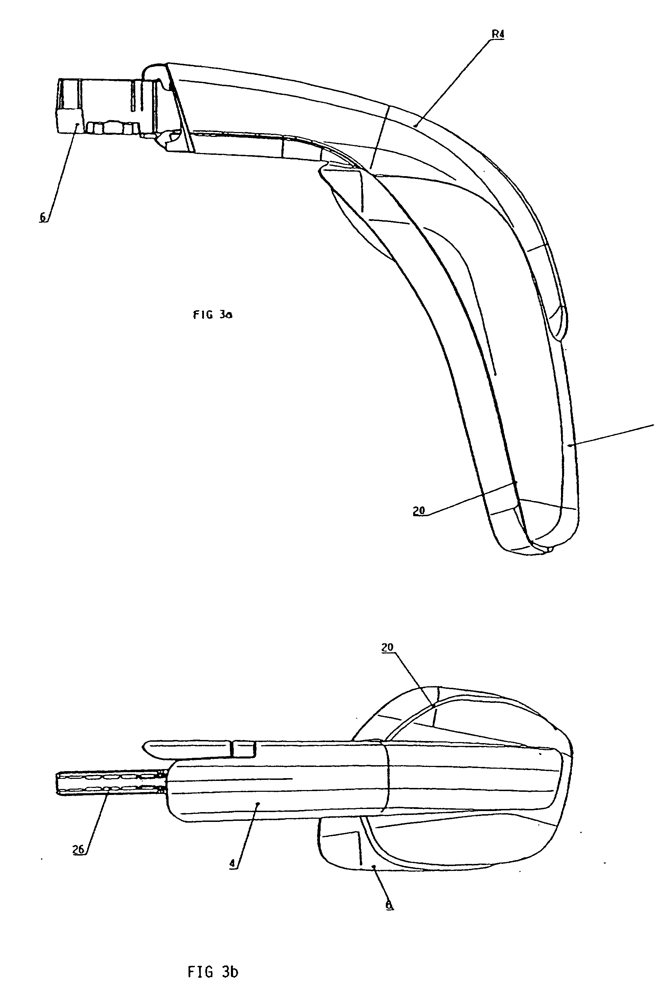

Fig. 3b eine Ansicht von oben des Spiegels nach Fig. 1,
Fig. 4a eine Aufsicht auf eine bevorzugte Ausführungsform des Zusatzspiegels,
Fig. 4b eine Schnittdarstellung entlang den Linien A-A in Fig. 4a,
Fig. 5a eine Seitenansicht der Verstell- und Abkalppeinrichtung der Spiegelanordnung gemäß der vorliegenden Erfindung, und
Fig. 5b einen Schnitt durch das Teil gemäß Fig. 5a parallel zur Zeichnungsebene.

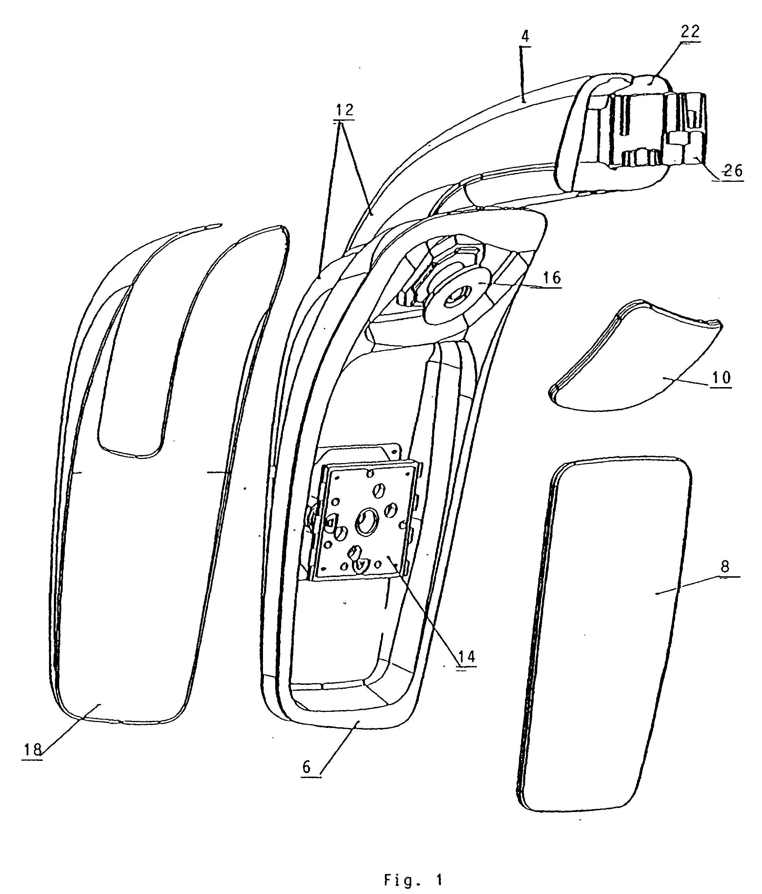

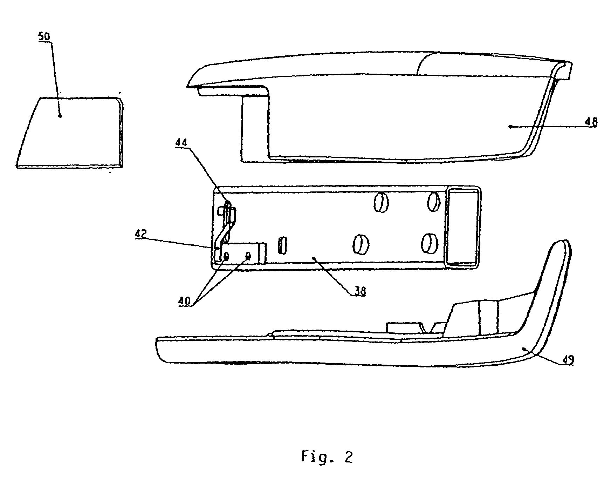

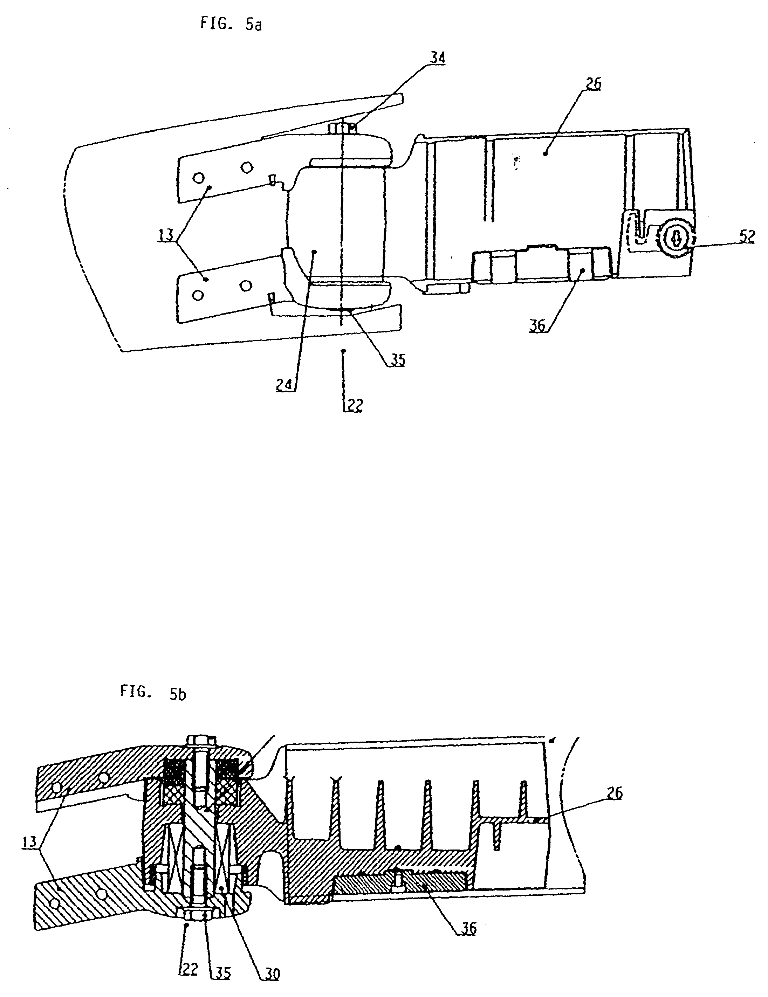

Figuren 1 und 2 zeigen perspektivisch eine bevorzugte Ausführungsform der erfindungsgemäßen hornförmigen Rückblickspiegelanordnung mit einer Halterung 2 zur Montage der Spiegelanordnung links oder rechts an einem nicht näher dargestellten Fahrzeug. Die Halterung 2 ist mit einem Haltearm 4 verbunden. An dem anderen Ende des Haltearms 4 sind Hauptspiegel 8 und Zusatzspiegel 10 in einem gemeinsamen Gehäuse bzw. Spiegelkopf 6 angeordnet. Haltearm 4 und Spiegelkopf 6 bestehen aus einem geschäumten Formteil 12, das von einer in Fig. 1 nicht näher dargestellten Tragestruktur 13 durchsetzt wird, wie sie auch in der EP-A-0 865 967 verwendet wird. Diesbezüglich wird daher auf die EP-A-0 865 967 bezug genommen. Das fahrzeugseitige Ende der Tragestruktur 13 ist in Fig. 5a und 5b zu sehen. Hauptspiegel 8 und Zusatzspiegel 10 werden in dem gemeinsamen Gehäuse bzw. Spiegelkopf 6 auf entsprechende Verstelleinrichtungen 14 und 16 montiert. Der Spiegelkopf 6 wird in Fahrtrichtung durch eine Abdeckung 18 abgedeckt, die sich in der Fahrzeugfarbe lackieren läßt.

In den Figuen 3a und 3b ist eine am Spiegelkopf 6 umlaufende Wasserabrißkante gezeigt. Durch die Wasserabrißkante 20 wird verhindert, daß der Fahrtwind Wasser und Schmutz auf die Spiegelscheiben von Haupt- und Zusatzspiegel 8, 10 treibt.

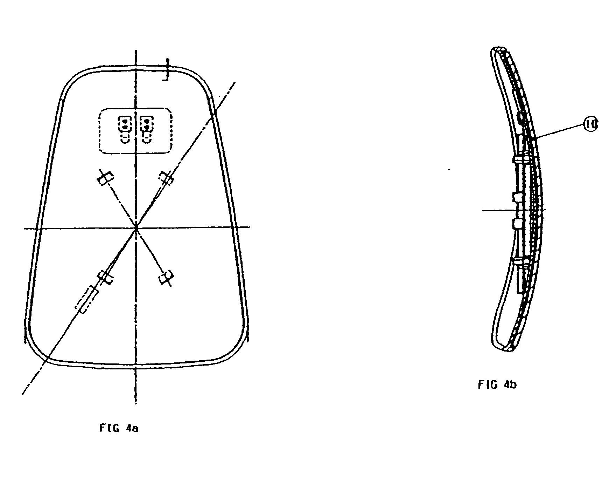

Fig. 4a zeigt eine Aufsicht auf den Zusatzspiegel 10 und Fig. 4b zeigt einen Schnitt entlang der Linie A-A in Fig 4a. Der Zusatzspiegel 10 ist gewölbt und trapezförmig mit abgerudeten Ecken. Durch diese Form wird gewährleistet, daß mit dem Zusatzspiegel 10 zwei Totwinkelbereiche, nämlich der Bereich vor dem Fahrzeug und der Bereich neben dem Fahrzeug zwischen Forderende und Forderachse überwacht werden kann.

Das fahrzeugseitige Ende des Haltearms 4 ist mit einer Verstell- und Abklappeinrichtung 22 verbunden, mittels der sich die Grundwinkeleinstellung der Spiegelanordnung verstellen läßt und mittels der sich die Spiegelanordnung nach vorne - in Richtung Windschutzscheibe - oder nach hinten - in Richtung Seitenscheibe - wegklappen läßt. Die Verstell- und Abklappeinrichtung 22 umfaßt ein Scharniergelenk 24 mit zwei Gelenkarmen, wobei ein Gelenkarm das fahrzeugseitige Ende der Tragestruktur 13 und der andere Gelenkarm ein Einschubteil 26 ist.

Wie aus Fig. 5b zu ersehen ist, wird das Scharniergelenk 24 der Verstell- und Abklappeinrichtung 22 durch einen Scharnierbolzen 28 zusammengehalten, der eine Tellerfeder 30 und Rasterscheiben 32 durchsetzt. Der Scharnierbolzen 28 wird durch zwei Schrauben 34 und 35 von zwei Seiten her fixiert. Durch die Tellerfeder 30 werden die Rasterscheiben 32 aneinandergdrückt und die Spiegelanordnung wird somit in einer bestimmten Winkelstellung arretiert.

Die Halterung 2 ist als Klemmhalterung ausgeführt und umfaßt das Einschubteil 26, an dem ein Klemmkeil 36 vershiebbar gelagert ist, und ein rechteckrohrförmiges Klemmgegenlager 38. Das Klemmgegenlager 38 wird an der Karosserie des Fahrzeugs angeschraubt. Bei der Montage der Spiegelanordnung wird das Einschubteil 26 in das Klemmgegenlager 38 eingeschoben und durch Verschieben des Klemmkeils 36 mittels Klemmschrauben 40 festgeklemmt. Der Klemmkeil 36 ist quer zur Einführrichtung des Einschubteils 26 in das Klemmgegenlager 38 vershiebbar. Durch das Vershieben des Klemmkeils 36 wird das Einschubteil 26 nach oben gedrückt und der Klemmkeil 36 drückt nach unten gegen die obere bzw. untere Begrenzung des Klemmgegenlagers 38.

Aus Sicherheitsgründen ist zusätzlich eine Rasterhalteeinrichtung vorgesehen, die ein am Klemmgegenlager 38 befestigtes Rasterfederelement 42 umfaßt. Das Rasterfederelement 42 ragt durch eine Öffnung 44 im Klemmgegenlager hindurch. Bei Einführung des Einschubteils 26 in das Klemmgegenlager 38 wird das Rsterfederelement 42 zurückgezogen bzw. zurückgedrückt und rastet dann in eine entsprechende Ausnehmung im Einschubteil 26 ein. Die Halterung 2 wird durch eine obere und eine untere Abdeckung 48 und 49 sowie durch einen Montagedeckel 50 abgedeckt. Der Montagedeckel 50 deckt die Klemmschrauben 40 und das Rasterfederelement 42 ab. Zur Demontage der Spiegelanordnung, genauer zur Demontage von Spiegelkopf 6 mit Haltearm 4 muß lediglich der Montagedeckel 50 entfernt und die Klemmschrauben 40 gelöst werden.

In Fig. 5a ist noch eine mittels Schlüssel betätigbare Absperrvorrichtung 52 gezeigt, die am Klemmgegenlager 38 angeordnet ist und durch die sich das Einschubteil 26 in dem Klemmgegenlager 38 sichern läßt. Die Absperrvorrichtung 52 stellt eine Diebstahlsicherung dar.

### Bezugszeichenliste

- 2: Halterung
- 4: Haltearm
- 6: Spiegelkopf bzw. gemeinsames Gehäuse
- 8: Hauptspiegel
- 10: Zusatzspiegel
- 12: Formteil
- 13: Tragestruktur
- 14: Hauptspiegelverstelleinrichtung
- 16: Zusatzspiegelverstelleinrichtung
- 18: Spiegelkopfabdeckung
- 20: Wasserabrißkante
- 22: Verstell- und Abklappeinrichtung
- 24: Scharniergelenk
- 26: Einschubteil der Halterung 2
- 28: Scharnierbolzen
- 30: Tellerfeder
- 32: Rasterscheiben
- 34: Schraube
- 35: Schraube
- 36: Klemmkeil
- 38: Klemmgegenlager
- 40: Klemmschrauben
- 42: Rasterfederelement
- 44: Öffnung im Klemmgegenlager 38 für das Rasterfederelement 42
- 48: obere Abdeckung der Halterung 2
- 49: untere Abdeckung der Halterung 2
- 50: Montagedeckel
- 52: Absperrvorrichtung

## Patentansprüche

1. Hornförmige Rückblickspiegelanordnung für Nutzfahrzeuge, insbesondere für Omnibusse, mit
einer Halterung (2) zur Montage der Spiegelanordnung links oder rechts am Fahrzeug,
einem mit der Halterung (2) verbundenen Haltearm (4) mit einer Tragestruktur (13) und einem fahrzeugseitigen und einem freien Ende,
einem an dem freien Ende der Tragestruktur (13) befestigten Hauptspiegel (8) mit Gehäuse (6),
einem die Tragestruktur (13) umgebenden Formteil (12) zur Abdeckung der Tragestruktur (13) und zur Halterung wenigstens eines über dem Hauptspiegel (8) angeordneten Zusatzspiegels (10) zur Überwachung von für den Fahrer nicht einsehbaren Totwinkelbereichen,
**dadurch gekennzeichnet,**
**daß** das Gehäuse (6) des Hauptspiegels (8) in das Formteil (12) integriert ist, und daß Haupt- und Zusatzspiegel (8, 10) in dem Gehäuse (6) gemeinsamen angeordnet sind.

2. Rückblickspiegelanordnung nach Anspruch 1, **dadurch gekennzeichnet, daß** ein einzelner Zusatzspiegel (10) zur Überwachung des Bereichs vor dem Fahrzeug und des Bereichs links bzw. rechts zwischen dem Vorderende des Fahrzeugs und der Vorderachse das Fahrzeugs vorgesehen ist.

3. Rückblickspiegelanordnung nach Anspruch 2, **dadurch gekennzeichnet, daß** der einzelne Zusatzspiegel (10) eine gewölbte Spiegelscheibe umfaßt, die die Form eines Trapezes mit abgerundeten Ecken aufweist.

4. Rückblickspiegelanordnung nach Anspruch 1, 2 oder 3, **dadurch gekennzeichnet, daß** Haupt- und/oder Zusatzspiegel (8, 10) elektromotorisch verstellbar und/oder heizbar sind.

5. Rückblickspiegelanordnung nach einem der vorhergehenden Ansprüche, **gekennzeichnet durch** eine Abdeckung (18), die das Gehäuse (6) von der Fahrtrichtung her abdeckt.

6. Rückblickspiegelanordnung nach Anspruch 4, **dadurch gekennzeichnet, daß** die Abdeckung (18) des Gehäuses (6) einteilig ist.

7. Rückblickspiegelanordnung nach einem der vorhergehenden Ansprüche, **dadurch gekennzeichnet, daß** an dem Gehäuse (6) eine umlaufende Wasserabrißkante (20) ausgebildet ist.

8. Rückblickspiegelanordnung nach einem der vorhergehenden Ansprüche, **dadurch gekennzeichnet, daß** die Tragestruktur (13) eine Rohrstruktur ist und daß das Formteil (12) ein geschäumtes Formteil insbesondere aus 2-Komponenten-Hartschaum ist.

9. Rückblickspiegelanordnung nach einem der vorhergehenden Ansprüche, **dadurch gekennzeichnet, daß** über einen Verstellmechanismus (22) die Grundwinkeleinstellung des Haltearms (4) gegenüber der Fahrzeugkarosserie vorzugsweise stufenlos einstellbar ist.

10. Rückblickspiegelanordnung nach Anspruch 9, **dadurch gekennzeichnet, daß** die Spiegelanordnung über den Verstellmechanismus (22) nach vorne und/oder hinten wegklappbar ist.

11. Rückblickspiegelanordnung nach einem der vorhergehenden Ansprüche, **dadurch gekennzeichnet, daß** Halterung (2) eine Klemmhalterung ist, die aufweist:
- eine am Fahreug befestigtes Klemmgegenlager (38),
- ein Einschubteil (26), das in das Klemmgegenlager (38) einführbar ist,
- einem an dem Einschubteil (38) verschiebbar gelagerten Klemmkeil (36), der durch Verschieben das Einschubteil (38) und den Klemmkeil (36) mit dem Klemmgegenlager (26) verklemmt.

12. Rückblickspiegelanordnung nach Anspruch 11, **dadurch gekennzeichnet, daß** der Klemmkeil (36) an dem Einschubteil (38) in einer Richtung quer zur Einschubrichtung des Einschubteils (38) verschiebbar ist.

13. Rückblickspiegelanordnung nach einem der vorhergehenden Ansprüche, **dadurch gekennzeichnet, daß** das Klemmgegenlager (38) ein rechteckförmiges Rohrstück ist.

14. Rückblickspiegelanordnung nach einem der vorhergehenden Ansprüche, **dadurch gekennzeichnet, daß** Halterung (2) eine mit einem Schlüssel betätigbare Absperrvorrichtung (52) als Diebstahlsicherung aufweist.

15. Rückblickspiegelanordnung nach einem der vorhergehenden Ansprüche 11 bis 14, **dadurch gekennzeichnet, daß** Klemmhalterung (2) eine Rasterhalteeinrichtung (42, 44) umfaßt.

16. Rückblickspiegelanordnung nach Anspruch 15, **dadurch gekennzeichnet, daß** die Rasterhalteeinrichtung ein Rasterfederelement umfaßt, das an dem Klemmgegenlager befestigt ist und das in eine entsprechende Ausnehmung im Einschubteil einrastet.

17. Rückblickspiegelanordnung nach einem der vorhergehenden Ansprüche 11 bis 16, **dadurch gekennzeichnet, daß** der Klemmkeil mittels Klemmschrauben in Klemmrichtung verschiebbar ist.

18. Rückblickspiegelanordnung nach Anspruch 17, **dadurch gekennzeichnet, daß** die Klemmschrauben in Schraublöcher im Klemmgegenlager eingeschraubt sind.

## Claims

1. A horn-shaped rearview mirror assembly for commercial vehicles, in particular for buses, comprising
a support structure (2) for mounting the mirror assembly on the left or right of the vehicle,
a support arm (4) connected with the support structure (2), which has a carrier structure (13) and vehicle-side and free ends,
a main mirror (8) affixed to the free end of the carrier structure (13) and having a housing (6), and a molded component (12) encompassing the carrier structure (13) for covering the carrier structure (13) and for mounting at least one supplementary mirror (10) arranged above the main mirror (8) for the observation of dead-angle zones not visible to the driver,
**characterized in that** the housing (6) of the main mirror (8) is integrated into the molded component (12), and
the main mirror (8) and the supplementary mirror (10) are jointly arranged in the housing (6).

2. A rearview mirror assembly in accordance with Claim 1, **characterized in that** a single supplementary mirror (10) is provided for observation of the zone in front of the vehicle and the zones to the left and right between the front end of the vehicle and the front axle of the vehicle.

3. A rearview mirror assembly in accordance with Claim 2, **characterized in that** the single supplementary mirror (10) includes a domed mirror pane having the shape of a trapezoid with rounded corners.

4. A rearview mirror assembly in accordance with Claim 1, 2 or 3, **characterized in that** the main mirror (8) and/or the supplementary mirror (10) are adjustable by electric motors and/or heatable.

5. A rearview mirror assembly in accordance with any one of the foregoing claims, **characterized by** a cover (18) which covers the housing (6) on the side facing the direction of travel.

6. A rearview mirror assembly in accordance with Claim 4, **characterized in that** the cover (18) of the housing (6) is in one part.

7. A rearview mirror assembly in accordance with any one of the foregoing claims, **characterized in that** a peripheral water disruption rim (20) is formed on the housing (6).

8. A rearview mirror assembly in accordance with any one of the foregoing claims, **characterized in that** the carrier structure (13) is a tubular structure, and **in that** the molded component (12) is a foamed molded component, in particular of a 2-component hard foam material.

9. A rearview mirror assembly in accordance with any one of the foregoing claims, **characterized in that** the base angular position of the support arm (4) relative to the vehicle body is adjustable, preferably continuously adjustable, by an adjusting mechanism (22).

10. A rearview mirror assembly in accordance with Claim 9, **characterized in that** the mirror assembly may be folded away to the front and/or rear by the adjusting mechanism (22).

11. A rearview mirror assembly in accordance with any one of the foregoing claims, **characterized in that** the support structure (2) is a clamping mount comprising:
a clamping base (38) affixed to the vehicle,
an insertion part (26) insertable into the clamping base (38),
a clamping wedge (36) slidably mounted on the insertion part (38), for clamping the insertion part (38) and the clamping wedge (36) with the clamping base (26) by its sliding displacement.

12. A rearview mirror assembly in accordance with Claim 11, **characterized in that** the clamping wedge (36) is displaceable on the insertion part (38) in a direction transverse to the inserting direction of the insertion part (38).

13. A rearview mirror assembly in accordance with any one of the foregoing claims, **characterized in that** the clamping base (38) is a rectangular tube segment.

14. A rearview mirror assembly in accordance with any one of the foregoing claims, **characterized in that** the support structure (2) includes a locking means (52) which may be actuated with a key to serve as an anti-theft device.

15. A rearview mirror assembly in accordance with any one of the foregoing claims 11 to 14, **characterized in that** the clamping support structure (2) includes a snap-in detent means (42, 43).

16. A rearview mirror assembly in accordance with Claim 15, **characterized in that** the snap-in detent means includes a snap-in spring element which is affixed to the clamping base and which locks into a corresponding recess in the insertion part.

17. A rearview mirror assembly in accordance with any one of the foregoing claims 11 to 16, **characterized in that** the clamping wedge is movable in the direction of clamping by means of clamping screws.

18. A rearview mirror assembly in accordance with Claim 17, **characterized in that** the clamping screws are screwed into screw holes in the clamping base.

## Revendications

1. Rétroviseur en forme de cornes pour des véhicules utilitaires, en particulier pour des autobus, comprenant :
une fixation (2) pour le montage de l'ensemble de miroir, à gauche ou à droite sur le véhicule,
un bras de maintien (4), relié à la fixation (2) , avec une structure support (13) et une extrémité située côté véhicule et une extrémité libre,
un miroir principal (8), fixé à l'extrémité libre de la structure support (13) et muni d'un boîtier (6)
une pièce de forme (12), entourant la structure support (13), afin de couvrir cette structure support (13) et d'assurer la fixation au moins d'un miroir additionnel (10), disposé au-dessus du miroir principal (8), pour la surveillance des zones d'angle mort, non accessibles à la vue du conducteur,
**caractérisé en ce que**
le boîtier (6) du miroir principal (8) est intégré dans la pièce de forme (12), et
les miroirs principal et additionnel (8, 10) sont disposés conjointement dans le boîtier (6).

2. Rétroviseur selon la revendication 1, **caractérisé en ce qu'**un miroir additionnel (10) individuel est prévu pour la surveillance de la zone située devant le véhicule et de la zone située à gauche ou à droite, entre l'extrémité avant du véhicule et l'essieu avant du véhicule.

3. Rétroviseur selon la revendication 2, **caractérisé en ce que** le miroir additionnel (10) individuel comprend une vitre réfléchissante bombée, présentant la forme d'un trapèze, dont les coins sont arrondis.

4. Rétroviseur selon la revendication 1, 2 ou 3, **caractérisé en ce que** les miroirs principal et/ou additionnel (8, 10) sont réglables par un moteur électrique et/ou peuvent être chauffés.

5. Rétroviseur selon l'une des revendications précédentes, **caractérisé par** un couvercle (18) couvrant le boîtier (6) depuis la direction de roulage.

6. Rétroviseur selon la revendication 4, caractérisé en ce le couvercle (18) du boîtier (6) est réalisé d'une seule pièce.

7. Rétroviseur selon l'une des revendications précédentes, **caractérisé en ce qu'**une arête de décollement de l'eau (20) est formée en pourtour sur le boîtier (6).

8. Rétroviseur selon l'une des revendications précédentes, **caractérisé en ce que** la structure support (13) est une structure tubulaire et **en ce que** la pièce de forme (12) est une pièce de forme alvéolaire, en particulier formée d'une mousse dure à deux composants.

9. Rétroviseur selon l'une des revendications précédentes, **caractérisé en ce que**, par l'intermédiaire d'un mécanisme de réglage (22), le réglage de l'angle de base du bras de maintien (4) peut être effectué, de préférence de façon progressive et continue, par rapport à la carrosserie du véhicule.

10. Rétroviseur selon la revendication 9, **caractérisé en ce que** l'agencement de miroir peut être écarté par rabattement, vers l'avant et/ou vers l'arrière, par l'intermédiaire du mécanisme de réglage (22).

11. Rétroviseur selon l'une des revendications précédentes, **caractérisé en ce que** la fixation (2) est une fixation par serrage, qui présente :
- un contre-palier à serrage (38), fixé au véhicule,
- une partie d'insertion (26), susceptible d'être introduite dans le contre-palier à serrage (38),
- un coin de serrage (36), monté de façon déplaçable sur la partie d'insertion (38) et serrant par coulissement la partie d'insertion (38) et le coin de serrage (36), à l'aide du contre-palier à serrage (26).

12. Rétroviseur selon la revendication 11, **caractérisé en ce que** le coin de serrage (36) est déplaçable sur la partie d'insertion (38) dans une direction transversale à la direction d'introduction de la partie d'introduction d'insertion (38).

13. Rétroviseur selon l'une des revendications précédentes, **caractérisé en ce que** le contre-palier à serrage (38) est une pièce tubulaire de forme rectangulaire.

14. Rétroviseur selon l'une des revendications précédentes, **caractérisé en ce que** la fixation (2) présente un dispositif de blocage (52), actionnable à l'aide d'une clé et faisant office de sécurité anti-vol.

15. Rétroviseur selon l'une des revendications 1 à 14 précédentes, **caractérisé en ce que** la fixation à serrage (2) comprend un dispositif de maintien en.position indexée (42, 44).

16. Rétroviseur selon la revendication 15, **caractérisé en ce que** le dispositif de maintien en position indexée comprend un élément formant ressort à indexation, qui est fixé sur le contre-palier à serrage et s'encliquette dans un évidement correspondant, ménagé dans la partie d'insertion.

17. Rétroviseur selon l'une des revendications 11 à 16, **caractérisé en ce que** le coin de serrage est déplaçable dans la direction de serrage, à l'aide de vis de serrage.

18. Rétroviseur selon la revendication 17, **caractérisé en ce que** les vis de serrage sont vissées dans des trous taraudés, ménagés dans le contre-palier à serrage.
